# EUROPÄISCHE PATENTANMELDUNG

(11) **EP 3 530 880 A1**
(43) Veröffentlichungstag der Anmeldung: **28.08.2019**
(21) Anmeldenummer: 19157891.3
(22) Anmeldetag: 19.02.2019
(51) Int. Cl.: F01D 5/14, F01D 9/04

(54) **LEITSCHAUFELBLATT MIT GENEIGTEM ABSCHNITT, ZUGEHÖRIGES LEITSCHAUFELSEGMENT, MODUL, STRÖMUNGSMASCHINE UND VERFAHREN ZUM ENTWERFEN EINES MODULS**

(30) Priorität: 26.02.2018 DE 102018202888
(71) Anmelder: MTU Aero Engines AG, 80995 München (DE)
(72) Erfinder: Kislinger, Bernd, 85276 Reisgang (DE); Brettschneider, Markus, 85757 Karlsfeld (DE); Korte, Detlef, 85757 Karlsfeld (DE); Grüber, Björn, 82223 Eichenau (DE)

(57) **Zusammenfassung**

Die vorliegende Erfindung betrifft ein Leitschaufelblatt (20) zum Anordnen in einem Strömungskanalabschnitt (3) einer Strömungsmaschine (1), welches bezogen auf eine Umströmung in dem Strömungskanalabschnitt (3), eine Vorderkante und stromab dazu eine Hinterkante sowie eine Saugseite (20a) und eine Druckseite (20b) hat, wobei eine Sichtkante (20aa) auf der Saugseite (20a) des Leitschaufelblatts (20) bezogen auf eine Längsachse (2) der Strömungsmaschine (1) in axialer Richtung gesehen in einem radial inneren Abschnitt (21a) einen ersten Winkel α mit einem Kreisbogen um die Längsachse (2) einschließt und in einem radial äußeren Abschnitt (21b) einen zweiten Winkel γ mit einem Kreisbogen um die Längsachse (2) einschließt, und wobei das Leitschaufelblatt (20) in dem äußeren Abschnitt (21b) geneigt ist und das Leitschaufelblatt (20) in dem äußeren Abschnitt (21b) stärker geneigt ist als in dem inneren Abschnitt (21a).

## Beschreibung

### Technisches Gebiet

Die vorliegende Erfindung betrifft ein Leitschaufelblatt zum Anordnen im Strömungskanalabschnitt einer Strömungsmaschine sowie ein entsprechendes Modul.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Das Heißgas durchströmt auf einem Pfad von der Brennkammer über die Turbine bis zur Düse ein Volumen, wobei vorliegend zunächst ein Turbinenmodul und damit ein Abschnitt dieses Pfads bzw. Volumens betrachtet wird. Der von dem Heißgas durchströmte Teil des Turbinenmoduls wird als "Heißgaskanal" bezeichnet. Der Heißgaskanal bildet einen turbinenseitigen Abschnitt des Strömungskanals der Strömungsmaschine. Neben dem Heißgaskanal umfasst der Strömungskanal auch einen verdichterseitig von der Brennkammer gelegenen Abschnitt, auf dem ein Verdichtermodul von der angesaugten Luft durchströmt wird.

Die Turbine und der Verdichter sind typischerweise jeweils in mehrere Module untergliedert aufgebaut, können also bspw. ein Hochdruck-, Mitteldruck und/oder ein Niederdruckturbinenmodul bzw. ein Hochdruck-, Mitteldruck und/oder ein Niederdruckverdichtermodul aufweisen. Jedes dieser Module umfasst dann in der Regel mehrere Stufen, wobei jede Stufe aus einem Leitschaufelkranz und einem stromab darauffolgenden Laufschaufelkranz aufgebaut ist. Das vorliegend in Rede stehende Leitschaufelblatt ist Teil eines solchen Leitschaufelkranzes mit oder aus ein oder mehreren Leitschaufelsegmenten, wobei der Leitschaufelkranze dann insgesamt umlaufend eine Mehrzahl üblicherweise baugleicher Leitschaufelblätter aufweist. Dies soll, wie auch die Bezugnahme auf ein Strahltriebwerk, den vorliegenden Gegenstand zunächst illustrieren, den Erfindungsgedanken aber nicht in seiner Allgemeinheit beschränken. Bei der Strömungsmaschine kann es sich bspw. auch um eine stationäre Gasturbine handeln.

Ein Beispiel für ein Turbinenmodul mit Leitschaufeln, die an ihren rotor- und statorseitigen Enden radial gerichtet sind und auf einem Abschnitt dazwischen in Umfangsrichtung geneigt sind, ist aus der EP0916812A1 bekannt.

### Darstellung der Erfindung

Der vorliegenden Erfindung liegt das technische Problem zugrunde, ein besonders vorteilhaftes Leitschaufelblatt sowie ein vorteilhaftes Modul, insbesondere Turbinenmodul oder Verdichtermodul, mit einem solchen Leitschaufelblatt anzugeben.

Dies wird erfindungsgemäß mit dem Leitschaufelblatt gemäß Anspruch 1 sowie dem Modul gemäß Anspruch 12 gelöst. Wie nachstehend im Einzelnen diskutiert, ist das Leitschaufelblatt in einem radial äußeren Abschnitt geneigt (gegenüber einer Radialrichtung verkippt). Das Leitschaufelblatt ist jedoch nicht über seine gesamte Erstreckung verkippt, sondern es ist in einem radial inneren Abschnitt zumindest weniger geneigt als in dem äußeren Abschnitt. In anderen Worten verläuft das Leitschaufelblatt von radial innen nach radial außen in einem mittleren Abschnitt mit einem Knick. Die allenfalls geringe Neigung radial innen ist aerodynamisch von Vorteil, hilft nämlich aerodynamische Verluste zu verringern und damit den Wirkungsgrad zu verbessern (im Vergleich zu einer im Gesamten geneigten Schaufel). Ein etwaiger Wirkungsgradnachteil, der sich durch das Neigen ergeben kann, lässt sich somit zumindest verringern bzw. minimal halten. Im Falle einer zu starken Neigung radial innen könnten bspw. die Machzahlen saugseitig zu hoch werden bzw. auch Sekundärverluste eintreten.

Das Neigen der Leitschaufel ist andererseits insoweit von Vorteil, als sich damit eine gewisse Entkopplung bzw. Verringerung der Anregung durch den stromauf angeordneten Laufschaufelkranz ergibt. Erfindungsgemäß wird dazu nicht das Gitter geneigt, das die Anregung verursacht (der stromauf angeordnete Laufschaufelkranz), sondern es wird das angeregte Gitter geneigt bzw. stärker geneigt, vgl. Anspruch 12. Durch die Neigung des stromab angeordneten Leitgitters kann dessen Anregung durch den Nachlauf des stromaufwärtigen Laufgitters verringert werden. Der Nachlauf trifft nicht in einem Zeitpunkt auf das gesamte Leitschaufelblatt, sondern dessen Neigung entsprechend mit einem gewissen Zeitverlauf. Bildlich gesprochen bekommt das Leitschaufelblatt also keinen vollen Schlag ab, sondern wird dieser ein wenig gestreckt bzw. verschmiert. Dies kann bspw. hinsichtlich einer *High Cycle Fatigue*-Beständigkeit von Vorteil sein, nämlich bspw. Eigenfrequenzanregungen zumindest verringern.

Hierbei ist das im Vergleich zum stromaufwärtigen Laufgitter stärkere Neigen des Leitgitters, also die Anpassung des angeregten und nicht des anregenden Gitters, aufgrund strukturmechanischer Überlegungen von Vorteil. Durch das Neigen des Schaufelblatts verschiebt sich nämlich dessen Massenschwerpunkt, was im Falle eines Laufschaufelblatts aufgrund der Fliehkräfte eine erhebliche mechanische Belastung ergeben kann, etwa des Schaufelblatts selbst bzw. auch des Übergangsbereichs in das Deckband.

Bevorzugte Ausgestaltungen finden sich in den abhängigen Ansprüchen und der gesamten Beschreibung, wobei in der Darstellung der Merkmale nicht immer im Einzelnen zwischen dem Leitschaufelblatt bzw. dem entsprechenden Modul, insbesondere Turbinen- oder Verdichtermodul, oder auch der Strömungsmaschine insgesamt unterschieden wird. Ferner ist die Offenbarung auch zumindest implizit hinsichtlich sämtlicher Anspruchskategorien zu lesen.

Generell bezieht sich im Rahmen dieser Offenbarung "axial" auf die Längsachse des Moduls, mithin also die Längsachse der Strömungsmaschine, die bspw. mit einer Drehachse der Rotoren zusammenfällt. "Radial" betrifft die dazu senkrechten, davon weg weisenden Radialrichtungen, und ein "Umlauf" bzw. "umlaufend" oder die "Umlaufrichtung" betreffen die Drehung um die Längsachse. "Ein" und "eine" sind im Rahmen dieser Offenbarung ohne ausdrücklich gegenteilige Angabe als unbestimmte Artikel und damit immer auch als "mindestens ein" bzw. "mindestens eine" zu lesen. Es hat also bspw. der Leitschaufelkranz oder das Leitschaufelsegment mit dem erfindungsgemäßen Leitschaufelblatt eine Mehrzahl solcher Blätter, die bspw. zueinander um die Längsachse drehsymmetrisch angeordnet sind).

Hauptanspruchsgemäß wird zur Beschreibung des Leitschaufelblatts "mit Knick" zunächst auf einen ersten Winkel α Bezug genommen. Diesen Winkel schließt, betrachtet man das Leitschaufelblatt in axialer Richtung (auf dessen Vorderkante blickend), eine Sichtkante des Leitschaufelblatts in einem radial inneren Abschnitt davon mit einem Kreisbogen um die Längsachse ein. Konkret wird der Winkel α zwischen der Sichtkante und einer Tangente an besagten Kreisbogen genommen, die dort an den Kreisbogen gelegt wird, wo die Sichtkante auf den Kreisbogen trifft bzw. diesen schneidet. Die Sichtkante ergibt sich in der Axialansicht gewissermaßen als umlaufseitiger Rand des Schaufelblatts. Sie verläuft saugseitig dort, wo das Schaufelblatt seine maximale Dicke (Profildicke) hat.

Ferner wird ein zweiter Winkel γ betrachtet, den die Sichtkante in einem radial äußeren Abschnitt mit einem Kreisbogen um die Längsachse einschließt, konkret einer Tangente an den Kreisbogen (dort wo die Sichtkante darauf trifft bzw. schneidet). Generell beziehen sich diese Betrachtungen auf eine Axialansicht, bleibt also eine etwaige anteilige Erstreckung, den die Sichtkante bzw. die Linie der maximalen Profildicke in axialer Richtung hat, außer Betracht. In anderen Worten wird mit der Axialansicht eine senkrechte Projektion des Schaufelblatts in eine zur Längsachse senkrechte Ebene betrachtet (und können die Winkel in dieser Ebene gemessen werden).

Die eingangs erwähnte Neigung des Leitschaufelblatts in dem radial äußeren Abschnitt ergibt sich zunächst daraus, dass γ-90° dem Betrag nach größer 0° ist. Es wird also der Betrag der Differenz genommen, dieser Betrag soll größer 0° sein (der Winkel γ kann im Einzelnen größer oder kleiner als 90° sein, siehe unten im Detail). Ferner soll das Leitschaufelblatt, wie vorstehend diskutiert, in dem radial inneren Abschnitt weniger geneigt sein. Entsprechendes ist γ-90° dem Betrag nach, also der Betrag dieser Differenz, größer als α-90°. Egal ob das Schaufelblatt in dem radial äußeren Abschnitt zur Saugseite hin geneigt ist (γ>90°) oder zur Druckseite hin geneigt ist (γ<90°), soll die Differenz zu 90° und damit die Verkippung gegenüber der Radialrichtung jedenfalls größer als in dem radial inneren Abschnitt sein.

Ein entsprechendes Leitschaufelblatt kann bspw. generativ hergestellt werden, also anhand eines Datenmodells aus einem formlosen bzw. formneutralen Werkstoff durch bereichsweise selektives Verfestigen erzeugt werden, etwa in einem Pulverbettverfahren. Andererseits ist aber auch eine gusstechnische Herstellung möglich.

In bevorzugter Ausgestaltung beträgt der erste Winkel α, also der innere Winkel, mindestens 85°, wobei mindestens 87° bzw. 89° weiter und besonders bevorzugt sind. Vorteilhafte Obergrenzen, die im Allgemeinen auch unabhängig von den eben genannten Untergrenzen offenbart sein sollen (was auch umgekehrt gilt), liegen bei in der Reihenfolge der Nennung zunehmend bevorzugt höchstens 95°, 93° bzw. 91°. Besonders bevorzugt ist ein radial innen überhaupt nicht geneigtes Leitschaufelblatt, liegt der Winkel α also bei 90°. Es wird auf die Vorteilsangaben eingangs verwiesen, mit der allenfalls kleinen Neigung radial innen lassen sich Wirkungsgradeinbußen, die sich im Vergleich zu einem insgesamt nicht geneigten Design ergeben können, zumindest begrenzen.

Gemäß einer bevorzugten Ausführungsform ist das Leitschaufelblatt in dem äußeren Abschnitt zur Saugseite hin geneigt, ist also der Winkel γ in dem äußeren Abschnitt größer 90°. Vorteilhafte Untergrenzen liegen bei mindestens 95°, 97°, 99° bzw. 100° (in der Reihenfolge der Nennung zunehmend bevorzugt). Vorteilhafte Obergrenzen, die auch von den Untergrenzen unabhängig offenbart sein sollen (was auch umgekehrt gilt), liegen bei höchstens 120°, 115° bzw. 110° (in der Reihenfolge der Nennung zunehmend bevorzugt).

In der Zusammenschau ergibt sich aus den Winkeln α und β der radial innen weniger als radial außen geneigte Verlauf. Alternativ könnte man auch einen Schnittwinkel β betrachten, den die Sichtkante radial innen mit der Sichtkante radial außen einschließt. Dieser Winkel sollte dann bspw. mindestens 5° betragen, mit möglichen (davon unabhängigen) Obergrenzen bei höchstens 40°, 30° bzw. 20°.

Bei einer bevorzugten Ausführungsform ist das Leitschaufelblatt in dem äußeren Abschnitt zur Druckseite hin geneigt, ist der Winkel γ also kleiner 90°. Im Vergleich zu dem zur Saugseite geneigten Schaufelblatt ist die Neigung zur Druckseite bevorzugt eher klein, beträgt nämlich γ vorzugsweise mindestens 85° (mit möglichen Obergrenzen bei 89° bzw. 88°).

Die folgenden Ausgestaltungen betreffen die radialen Erstreckungen des inneren bzw. äußeren Abschnitts (oder auch des mittleren Abschnitts dazwischen). Als Referenz beziehen sich die Prozentangaben dabei auf die radiale Höhe des Strömungskanalabschnitts (genommen zwischen Innen- und Außendeckband), und zwar im Bereich des Schaufelblatts (axial dort, wo das Schaufelblatt seine maximale Profildicke hat). Im Falle eines konturierten Ringraums wird die radiale Höhe dabei als über eine Teilung genommener Mittelwert zugrunde gelegt.

Der Strömungskanalanschnitt kann der Heißgaskanal sein oder ein verdichterseitiger Abschnitt des Strömungskanals.In bevorzugter Ausgestaltung hat der radial innere Abschnitt eine radiale Erstreckung, die mindestens 20 % und (davon unabhängig) höchstens 50 % der radialen Höhe des Strömungskanalabschnitts ausmacht. Generell, also auch unabhängig von diesen quantitativen Angaben, ist der erste Winkel α über den radial inneren Abschnitt hinweg bevorzugt konstant.

Bei einer bevorzugten Ausführungsform hat der radial äußere Abschnitt eine radiale Erstreckung, die mindestens 25 % und (davon unabhängig) höchstens 55 % der radialen Höhe des Strömungskanalabschnitts ausmacht. Wiederum auch unabhängig hiervon ist der zweite Winkel γ bevorzugt über den äußeren Abschnitt hinweg konstant.

Bei einer bevorzugten Ausführungsform hat ein mittlerer Abschnitt, in dem sich die Neigung zwischen dem inneren und dem äußeren Abschnitt ändert, in dem also der Knick liegt, eine radiale Erstreckung von mindestens 5 % und (davon unabhängig) höchstens 25 % der radialen Höhe des Strömungskanalabschnitts.

Die Sichtkante kann im radial inneren und äußeren Abschnitt geradlinig verlaufen und innerhalb des dazwischenliegenden mittleren Abschnitts, der vorzugsweise an den radial inneren und äußeren Abschnitt anschließt, mit einem monotonen, insbesondere streng monotonen Krümmungsverlauf, von dem ersten Winkel α in den zweiten Winkel γ übergehen. Mit anderen Worten kann der gesamte Krümmungs- bzw. Neigungsverlauf frei von Krümmungsrichtungswechseln bzw. Wendepunkten sein.

Die Erfindung betrifft auch einen Leitschaufelkranz und ein Leitschaufelsegment jeweils mit einem vorliegend beschriebenen Leitschaufelblatt, bevorzugt jeweils mehreren baugleichen und drehsymmetrisch zueinander angeordneten Leitschaufelblättern.

Vorzugsweise umfasst ein Leitschaufelsegment mehrere Leitschaufelblätter und sind alle Leitschaufelblätter erfindungsgemäß ausgebildet, insbesondere auch baugleich ausgebildet und/oder drehsymmetrisch zueinander angeordnet.

Bei einigen Ausführungsform sind alle Leitschaufelblätter des Leitschaufelkranzes erfindungsgemäß ausgebildet, insbesondere auch baugleich ausgebildet und/oder drehsymmetrisch zueinander angeordnet.

Ferner betrifft die Erfindung ein Modul, beispielsweise Turbinen- oder Verdichtermodul, mit einem Leitschaufelkranz und einem stromaufwärts davon (unmittelbar davor) angeordneten Laufschaufelkranz. Dabei ist eine etwaige Neigung von dessen Laufschaufelblättern geringer als die Neigung des Leitschaufelblatts in dem radial äußeren Abschnitt. Bevorzugt sind die Laufschaufelblätter überhaupt nicht geneigt.Die Erfindung betrifft auch eine Strömungsmaschine mit einem solchen Modul, insbesondere ein Strahltriebwerk.

Ferner betrifft die Erfindung ein Verfahren zum Entwerfen eines solchen Moduls bzw. einer entsprechenden Strömungsmaschine. Dabei wird ein Nachlauf des stromaufwärts angeordneten Laufschaufelkranzes betrachtet, bspw. mittels einer CFD-Simulation. Dann wird die Neigung des bzw. der stromabwärts angeordneten Laufschaufelblätter derart angepasst, dass deren Anregung durch das stromaufwärts angeordnete Laufgitter zumindest verringert wird.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Fig. 1: ein Strahltriebwerk in einem Axialschnitt;
- Fig. 2: die Erstreckung eines erfindungsgemäßen Leitschaufelblatts in einer Axialansicht,
- Fig. 3: die Erstreckung eines anderen erfindungsgemäßen Leitschaufelblatts in einer Axialansicht.

### Bevorzugte Ausführung der Erfindung

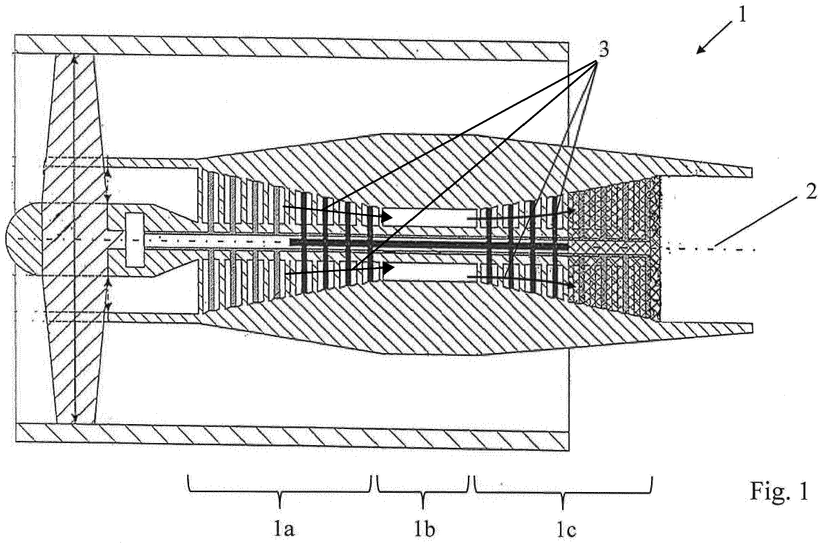

**Fig. 1** zeigt eine Strömungsmaschine 1, konkret ein Mantelstromtriebwerk, in einem Axialschnitt. Die Strömungsmaschine 1 gliedert sich funktional in Verdichter 1a, Brennkammer 1b und Turbine 1c. Sowohl der Verdichter 1a als auch die Turbine 1c sind jeweils aus mehreren Stufen aufgebaut, jede Stufe setzt sich aus einem Leit- und einem darauffolgenden Laufschaufelkranz zusammen. Die Laufschaufelkränze rotieren im Betrieb um die Längsachse 2 der Strömungsmaschine 1. Im Verdichter 1a wird die angesaugte Luft komprimiert, insbesondere mithilfe von Laufschaufelkränzen, die um die Längsachse 2 rotieren, und dann in der nachgelagerten Brennkammer 1b mit hinzugemischtem Kerosin verbrannt. Das Heißgas durchströmt einen Strömungskanalabschnitt 3, nämlich den Heißgaskanal, und treibt dabei die Laufschaufelkränze an, die um die Längsachse 2 rotieren.

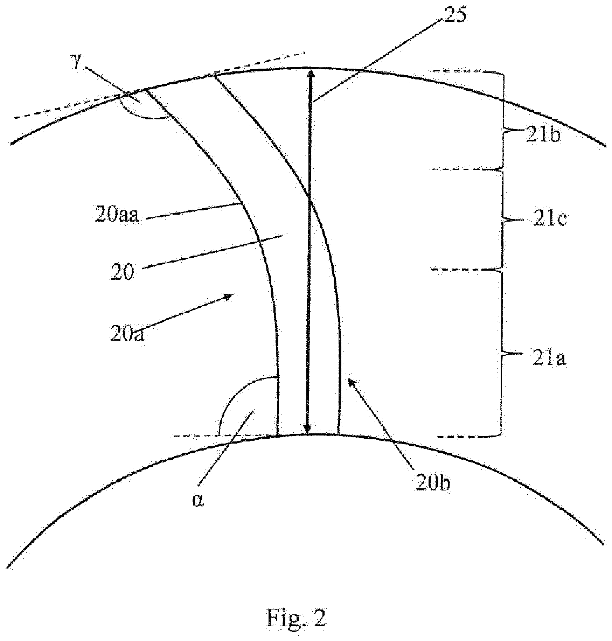

**Fig. 2** zeigt eine erste Variante eines erfindungsgemäßen Leitschaufelblatts 20, das in einem radial inneren Abschnitt 21a nicht geneigt ist, jedoch in einem radial äußeren Abschnitt 21b. Dementsprechend beträgt der erste Winkel α 90°, liegt der zweite Winkel γ jedoch bei rund 100° (die Darstellung ist schematisch und zur Illustration mit einer überproportionalen Neigung gezeichnet).

Aufgrund der Neigung in dem radial äußeren Abschnitt 21b ist eine Anregung durch den Nachlauf des vorgelagerten Laufgitters verringert, vgl. die Beschreibungseinleitung im Einzelnen. Es ist aber andererseits nicht das Leitschaufelblatt 20 im Gesamten geneigt, weil sich mit der geraden Erstreckung in dem inneren Abschnitt 21a Strömungsnachteile und damit Wirkungsgradverluste zumindest verringern lassen, vgl. auch die Beschreibungseinleitung im Einzelnen. Das Leitschaufelblatt 20 gemäß Fig. 2 ist zur Saugseite 20a hin geneigt, die Druckseite 20b liegt umlaufend entgegengesetzt. Die Winkel α und γ werden saugseitig in der Axialansicht zur Sichtkante 20aa des Leitschaufelblatts 20 genommen, entlang welcher das Leitschaufelblatt 20 seine maximale Profildicke hat.

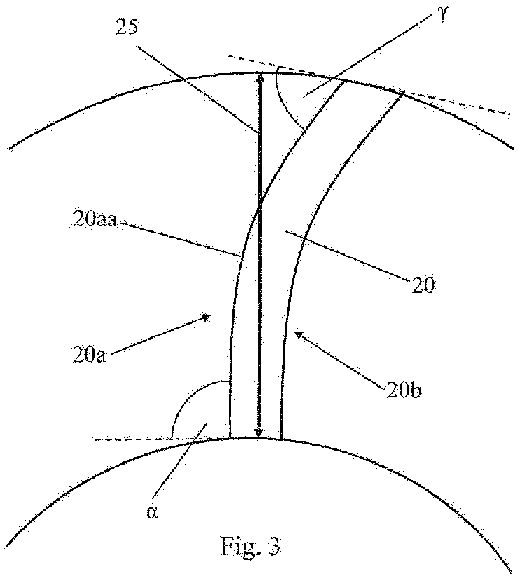

Bei der Variante gemäß **Fig. 3** ist das Leitschaufelblatt 20 zur Druckseite hin geneigt, ist also entsprechend der Winkel γ < 90°. Konkret liegt er in diesem Beispiel bei 87°, was in der Zeichnung wiederum nicht proportional wiedergegeben ist. Der Winkel α liegt bei 90°.

Sowohl im Falle der Variante gemäß Fig. 2 als auch bei jener gemäß Fig. 3 erstreckt sich der erste Abschnitt 21a über rund 40 % der radialen Kanalhöhe 25, der radial äußere Abschnitt 21b über 45 %. Entsprechend erstreckt sich der radial mittlere Abschnitt 21c über 15 % der Kanalhöhe 25. Im Einzelnen wäre selbstverständlich auch eine andere Aufteilung möglich, vgl. die Beschreibungseinleitung im Einzelnen.

**BEZUGSZEICHENLISTE**

| | |
|---|---|
| Strömungsmaschine | 1 |
| Verdichter | 1a |
| Brennkammer | 1b |
| Turbine | 1c |
| Längsachse | 2 |
| Strömungskanalabschnitt | 3 |
| Leitschaufelblatt | 20 |
| Saugseite | 20a |
| Sichtkante | 20aa |
| Druckseite | 20b |
| Radial innerer Abschnitt | 21a |
| Radial äußerer Abschnitt | 21b |
| Radial mittlerer Abschnitt | 21c |
| Radiale Kanalhöhe | 25 |

## Patentansprüche

1. Leitschaufelblatt (20) zum Anordnen in einem Strömungskanalabschnitt (3) einer Strömungsmaschine (1),
welches bezogen auf eine Umströmung in dem Strömungskanalabschnitt (3), eine Vorderkante und stromab dazu eine Hinterkante sowie eine Saugseite (20a) und eine Druckseite (20b) hat,
wobei eine Sichtkante (20aa) auf der Saugseite (20a) des Leitschaufelblatts (20) bezogen auf eine Längsachse (2) der Strömungsmaschine (1) in axialer Richtung gesehen
- in einem radial inneren Abschnitt (21a) einen ersten Winkel α mit einem Kreisbogen um die Längsachse (2) einschließt und
- in einem radial äußeren Abschnitt (21b) einen zweiten Winkel γ mit einem Kreisbogen um die Längsachse (2) einschließt,
und wobei
- das Leitschaufelblatt (20) in dem äußeren Abschnitt (21b) geneigt ist, also γ - 90° dem Betrag nach > 0° ist (|γ - 90°| > 0°), und
- das Leitschaufelblatt (20) in dem äußeren Abschnitt (21b) stärker geneigt ist als in dem inneren Abschnitt (21a), also γ - 90° dem Betrag nach > α -90° ist (|γ- 90°| > α -90°).

2. Leitschaufelblatt (20) nach Anspruch 1, bei welchem der erste Winkel α in dem inneren Abschnitt (21a) mindestens 85° und höchstens 95° beträgt.

3. Leitschaufelblatt (20) nach Anspruch 2, bei welchem der erste Winkel α in dem inneren Abschnitt (21a) 90° beträgt.

4. Leitschaufelblatt (20) nach einem der vorstehenden Ansprüche, welches in dem äußeren Abschnitt (21b) zu der Saugseite (20a) hin geneigt ist, also der zweite Winkel γ in dem äußeren Abschnitt (21b) > 90° ist.

5. Leitschaufelblatt (20) nach Anspruch 4, bei welchem der zweite Winkel γ in dem äußeren Abschnitt (21b) mindestens 95° und höchstens 120° beträgt.

6. Leitschaufelblatt (20) nach einem der Ansprüche 1 bis 3, welches in dem äußeren Abschnitt (21b) zu der Druckseite (20b) hin geneigt ist, also der zweite Winkel γ in dem äußeren Abschnitt (21b) < 90° ist.

7. Leitschaufelblatt (20) nach Anspruch 6, bei welchem der zweite Winkel γ in dem äußeren Abschnitt (21b) mindestens 85° und weniger als 90° beträgt.

8. Leitschaufelblatt (20) nach einem der vorstehenden Ansprüche, bei welchem der innere Abschnitt (21a) eine radiale Erstreckung hat, die mindestens 20 % und höchstens 50 % einer radialen Höhe (25) des Strömungskanalabschnitts (3) ausmacht.

9. Leitschaufelblatt (20) nach einem der vorstehenden Ansprüche, bei welchem der radial äußere Abschnitt eine radiale Erstreckung hat, die mindestens 25 % und höchstens 55 % einer radialen Höhe des Strömungskanalabschnitts (3) ausmacht.

10. Leitschaufelblatt (20) nach einem der vorstehenden Ansprüche, bei welchem ein mittlerer Abschnitt (21c), in dem ein Neigungswinkel des Leitschaufelblatts (20) von dem ersten Winkel α in den zweiten Winkel γ übergeht, eine radiale Erstreckung hat, die mindestens 5 % und höchstens 25 % einer radialen Höhe (25) des Strömungskanalabschnitts (3) ausmacht.

11. Leitschaufelblatt (20) nach einem der vorstehenden Ansprüche, bei welchem die Sichtkante (20aa) im radial inneren und äußeren Abschnitt (21a, 21b) geradlinig verläuft und innerhalb des dazwischenliegenden mittleren Abschnitts (21c), der an den radial inneren und äußeren Abschnitt (21a, 21b) anschließt, mit einem monotonen, insbesondere streng monotonen Krümmungverlauf, von dem ersten Winkel α in den zweiten Winkel γ übergeht.

12. Leitschaufelsegment mit einem Leitschaufelblatt (20), insbesondere mit allen Leitschaufelblättern (20) des Leitschaufelsegments, nach einem der vorstehenden Ansprüche.

13. Modul, insbesondere Turbinen- oder Verdichtermodul, mit einem Leitschaufelkranz mit einem, mehr oder allen Leitschaufelsegmenten nach Anspruch 11 und einem stromaufwärts des Leitschaufelkranzes angeordneten Laufschaufelkranz mit Laufschaufelblättern, wobei eine etwaige Neigung der Laufschaufelblätter geringer ist als die Neigung des Leitschaufelblatts (20) in dem radial äußeren Abschnitt (21b).

14. Strömungsmaschine (1), insbesondere Strahltriebwerk, mit einem Modul nach Anspruch 13.

15. Verfahren zum Entwerfen eines Moduls nach Anspruch 13, insbesondere als Teil einer Strömungsmaschine (1) gemäß Anspruch 14, bei welchem Verfahren ein Nachlauf des stromaufwärts angeordneten Laufschaufelkranzes betrachtet wird und in Abhängigkeit davon die Neigung des Leitschaufelblatts (20) in dem radial äußeren Abschnitt (21b) angepasst wird.
